# EUROPÄISCHE PATENTSCHRIFT

(11) **EP 2 182 591 B1**
(45) Veröffentlichungstag und Bekanntmachung des Hinweises auf die Patenterteilung: **01.01.2014**
(21) Anmeldenummer: 09004242.5
(22) Anmeldetag: 25.03.2009
(51) Int. Cl.: H01R 13/506, H02K 5/22, H01R 13/52, H01R 13/627

(54) **Elektrischer Steckverbinder**
Electric plug connector
Connecteur électrique

(30) Priorität: 04.11.2008 DE 202008014604 U
(43) Veröffentlichungstag der Anmeldung: 05.05.2010
(73) Patentinhaber: Coninvers GmbH, 71083 Herrenberg (DE)
(72) Erfinder: Rudolph, Paul, 70563 Stuttgart (DE)
(74) Vertreter: Klocke, Peter

(56) Entgegenhaltungen:
- EP-A- 1 227 547
- EP-A- 1 858 122
- WO-A-2007/126535
- FR-A- 2 613 545
- US-A- 4 880 391
- US-A- 5 643 009
- US-B1- 6 231 365

## Beschreibung

Die Erfindung betrifft einen elektrischen Steckverbinder, mit einem isolierenden Kontaktträger, der eine Anzahl von parallel zueinander angeordnete Kontakte in Form von Kontaktstiften oder Kontaktbuchsen enthält und der in ein Steckverbindergehäuse axial einführbar ist, wobei die Kontakte von einer Vorderseite des Kontaktträgers her zugänglich sind und auf der Rückseite des Kontaktträgers Anschlussmittel zum Verbinden mit elektrischen Anschlussleitungen aufweisen.

Derartige Steckverbinder können unter anderem zur Spannungsversorgung von Drehstromverbrauchern, insbesondere Drehstrommotoren eingesetzt werden, deren ordnungsgemäße Funktion vom richtigen Anschluss an die Stromversorgung abhängt. Bei Drehstrommotoren werden bekanntermaßen die Drehrichtung und die Leistung des Motors durch die Anschlussart bestimmt. Übliche, dem Fachmann vertraute Anschlussarten für Mehrphasenmotoren sind die Dreiecks- und die Sternschaltung.

Mehrphasenmotoren werden üblicherweise ohne elektrisches Anschlusskabel und häufig unkonfiguriert vom Händler angeboten, um die Typenvielfalt bei der Bevorratung der Motoren zu reduzieren. In der Regel sind bei Mehrphasenmotoren die Enden der Wicklungsleiter in einem am Motorgehäuse vorgesehenen Motoranschlusskasten zugänglich, um sie mit den elektrischen Anschlussleitungen eines Drehstromnetzes zu verbinden. Die elektrische Verbindung und die Konfiguration erfolgt bei solchen Motoren häufig über in dem Motoranschlusskasten angeordnete Verbindungsklemmenblöcke. Zur Vereinfachung der Anschluss- bzw. Abschlussarbeiten und zur Senkung des dazu benötigten Zeitaufwandes ist es inzwischen gängige Praxis, die Verbindungsklemmenblöcke als Anschlussstecker mit einer entsprechenden Anzahl von Steckkontakten auszubilden und diese am Motoranschlusskasten nach außen zu führen. In den Anschlussstecker kann eine Anschlusskupplung mit Steckbuchsen eingesteckt und mit diesem verriegelt werden. Der Anschlusskupplung werden die elektrischen Anschlussleitungen des Drehstromnetzes mit einem Anschlusskabel zugeführt, in der sie in der benötigten Reihenfolge und mit der erforderlichen Brückenkonfiguration mit den Steckbuchsen verbindbar sind.

Das elektrische Anschlusskabel mit der Steckkupplung kann unabhängig vom Einbau des Motors von einer Elektrofachkraft vorbereitet werden, so dass nach dem Einbau des Motors die elektrische Verbindung zum Motor ohne Mitwirkung einer Elektrofachkraft einfach, schnell und sicher hergestellt und wieder getrennt werden können. Die elektrische Verbindung der Anschlussleitungen und der Brücken mit den Steckbuchsen erfolgt dabei zum Personenschutz in einem abgeschlossenen Anschlussraum der Steckkupplung, den das elektrische Anschlusskabel über eine Kabeldurchführung erreicht. Um Zugang zu dem elektrisch sicheren Anschlussraum zu ermöglichen, weist das Gehäuse einer solchen Steckkupplung üblicherweise einen abnehmbaren Gehäusedeckel oder dergleichen auf, der meist mit dem Kupplungsgehäuse verschraubt ist. Zum Entfernen des Gehäusedeckels ist aus Sicherheitsgründen ein Werkzeug, beispielsweise ein Schraubendreher erforderlich.

Als Nachteil eines derartigen Steckverbinders wird zum Einen angesehen, dass es zeitaufwändig ist, sich Zugang zu dem elektrisch sicheren Anschlussraum des Steckverbinders zu schaffen, und zum Anderen, dass das Steckverbindergehäuse, der Gehäusedeckel und meist auch die Befestigungsschraube vollständig voneinander trennbar sind, wodurch die Gefahr besteht, dass der Gehäusedeckel bzw. die Befestigungsschraube verlegt bzw. verloren gehen kann. Auf jeden Fall bedingt dies einen zusätzlichen Zeitaufwand, der unerwünscht ist. Außerdem reduziert eine sich in dem Anschlussraum hinein erstreckende Befestigungsschraube den Stauraum für die Enden der elektrischen Anschlussleitungen, insbesondere bei kleinen Bauformen des Steckverbinders.

Der Erfindung liegt die Aufgabe zugrunde, eine andere Möglichkeit vorzuschlagen, die es erlaubt, verschiedene erforderliche Anschlussvarianten von elektrischen Anschlussleitungen an die elektrischen Kontakte des Steckverbinders einfach, schnell und sicher herzustellen.

Diese Aufgabe wird erfindungsgemäß durch einen elektrischen Steckverbinder mit den Merkmalen des Anspruchs 1 gelöst. Weitere vorteilhafte Ausgestaltungen sind den Unteransprüchen zu entnehmen.

Danach weist das Steckverbindergehäuse des erfindungsgemäßen elektrischen Steckverbinders in Steckrichtung gesehen ein vorderes und ein hinteres Gehäuseteil auf, die mittels einer orthogonal zur Steckrichtung angeordneten Schwenkachse gelenkig miteinander verbunden und von einer abgewinkelten Montagestellung in eine gestreckte Gebrauchsstellung des Steckverbindergehäuses und umgekehrt schwenkbar sind. Der in das Steckverbindergehäuse axial einführbare Kontaktträger ist in der Gebrauchsstellung derart in den Gehäuseteilen positionierbar, dass er ein Schwenken der Gehäuseteile, d.h. ein Öffnen des Steckverbindergehäuses in einer Wirkposition zuverlässig verhindert. In der Wirkposition greift der Kontaktträger mindestens teilweise in das vordere und das hintere Gehäuseteil ein und liegt seitlich zumindest abschnittsweise innen an den Gehäuseteilen, insbesondere an sich nicht orthogonal zu der Schwenkachse des Steckverbindergehäuses erstreckenden Innenflächen des vorderen und des hinteren Gehäuseteils an.

Das vordere und das hintere Gehäuseteil sind vorzugsweise derart miteinander schwenkbar verbunden, dass im unverriegelten Zustand der beiden Gehäuseteile das hintere Gehäuseteil gegenüber dem vorderen Gehäuseteil um etwa 90 Grad oder mehr schwenkbar ist.

Der isolierende Kontaktträger des Steckverbinders, der eine Anzahl von parallel zueinander angeordnete elektrische Kontakte aufweist, ist vorzugsweise entgegen der Steckrichtung des Steckverbinders axial in das Steckverbindergehäuse einführbar. Dabei kann der Kontaktträger bei seitlich vom hinteren Gehäuseteil abstehenden vorderen Gehäuseteil zuerst mit seiner Vorderseite von hinten her oder mit seiner Rückseite von vorne her in das vordere Gehäuseteil axial eingeschoben werden. Alternativ kann er in der abgewinkelten Montagestellung des Steckverbindergehäuses mit seiner Rückseite zuerst in das hintere Gehäuseteil axial eingeschoben werden. Diese Variante setzt jedoch voraus, dass das hintere Gehäuseteil den Kontaktträger zumindest ohne angeschlossene Anschlussleitungen vollständig aufnehmen kann. Nachdem der Kontaktträger eingeschoben ist, wird er von dem vorderen Gehäuseteil oder dem hinteren Gehäuseteil an seinem Außenumfang gehalten und vorteilhafterweise zumindest abschnittsweise axial geführt. Dabei darf zum Schließen des Steckverbindergehäuses die Rückseite des Kontaktträgers nicht nach hinten über das vordere Gehäuseteil bzw. die Vorderseite des Kontaktträgers nicht in Richtung des vorderen Gehäuseteils über das hintere Gehäuseteil vorstehen. Ist dies der Fall, lassen sich die Gehäuseteile nicht in die Gebrauchsstellung schwenken. Das Steckverbindergehäuse lässt sich dann nicht schließen. In der Gebrauchsstellung kann der Kontaktträger in die Wirkstellung verschoben werden, in der er das Schwenken der beiden Gehäuseteile und damit das Öffnen des Steckverbindergehäuses nicht zulässt.

Vorzugsweise sind die beiden Gehäuseteile im gestreckten Zustand durch den Kontaktträger stirnseitig aneinander festlegbar. Zum Festlegen der beiden Gehäuseteile aneinander wird der Kontaktträger bei geschlossenem Steckverbindergehäuse axial in die Wirkstellung bewegt, bis ein in Einsteckrichtung hinterer Kontaktträgerabschnitt das hintere Gehäuseteil und ein in Einsteckrichtung vorderer Kontaktträgerabschnitt das vordere Gehäuseteil zumindest stellenweise formschlüssig untergreift. In dieser Stellung des Kontaktträgers bezüglich dem Steckverbindergehäuse übergreifen das vordere Gehäuseteil und das hintere Gehäuseteil einen mittleren Kontaktträgerabschnitt ebenfalls zumindest bereichsweise formschlüssig. Der formschlüssige Eingriff des mittleren Kontaktträgerabschnitts in das vordere Gehäuseteil und der entsprechende Eingriff des hinteren Kontaktträgerabschnittes in den vorderen Gehäuseteilabschnitt des hinteren Gehäuseteils verhindern ein Schwenken der beiden Gehäuseteile zuverlässig und dauerhaft. Der hintere Kontaktträgerabschnitt reicht im verriegelten Zustand der beiden Gehäuseteile nicht bis zu einem in Einsteckrichtung hinteren Gehäuseteilabschnitt des hinteren Gehäuseteils, so dass ein Hohlraum in dem hinteren Gehäuseteil als Anschlussraum des elektrischen Steckverbinders verbleibt.

Bei dem erfindungsgemäßen elektrischen Steckverbinder kann es sich um einen Steckverbinder mit an sich beliebiger Querschnittsform handeln. Für spezielle Anwendungen, beispielsweise als Motoranschlusskupplung, ist ein Flachsteckverbinder mit im wesentlichen rechteckiger Querschnittsform besonders gut geeignet. Bei allen geometrischen Ausführungsformen des erfindungsgemäßen Steckverbinders kann der Anschluss der elektrischen Anschlussleitungen entweder bei von dem Steckverbindergehäuse getrennten oder vom vorderen Gehäuseteil aufgenommenen Kontaktträger in zueinander abgewinkelter Stellung der beiden Gehäuseteile des Steckverbinders erfolgen. Damit sind die an der Rückseite des Kontaktträgers befindlichen Anschlussmittel der Kontakte zum Verbinden mit den elektrischen Anschlussleitungen sowie der Anschlussraum zum Verstauen der Enden der elektrischen Anschlussleitungen frei zugänglich.

Nach der erfolgten Anschlusskonfiguration und gegebenenfalls nach Einführen des Kontaktträgers in das vordere oder hintere Gehäuseteil wird der elektrische Steckverbinder zum Verschließen des Anschlussraumes in den gestreckten Zustand gebracht und anschließend durch Verschieben des Kontaktträgers, bis dessen mittlerer Kontaktträgerabschnitt der Schwenkachse des Steckverbindergehäuses gegenüberliegt, gegen Verschwenken der Gehäuseteile geschützt. In diesem Zustand ist das Schwenkgelenk zwischen den beiden Gehäuseteilen blockiert, so dass das vordere und das hintere Gehäuseteil starr miteinander verbunden sind. Um eine Verschiebung des Kontaktträgers in dem Steckverbindergehäuse bzw. aus diesem heraus, insbesondere beim Stecken des Steckverbinders sicher zu verhindern, ist es erforderlich, den Kontaktträger an mindestens einem der beiden Gehäuseteile lösbar festzulegen. Dies kann beispielsweise durch Verschrauben, Verrasten oder eine sonstige geeignete Maßnahme erfolgen.

Es hat sich gezeigt, dass es für die Anschlussarbeiten vorteilhaft ist, wenn der Kontaktträger des elektrischen Steckverbinders von dem vorderen Gehäuseteil gehalten wird. Dies vereinfacht das Verbinden der elektrischen Anschlussleitungen mit den auf der Rückseite des Kontaktträgers angeordneten Anschlussmitteln der elektrischen Kontakte wesentlich. Weiterer Vorteil ist, dass der Kontaktträger damit unverlierbar ist.

Vorzugsweise ist der Kontaktträger an dem vorderen Gehäuseteil in und entgegen der Steckrichtung derart axial verschiebbar geführt befestigt, dass der Kontaktträger, wenn die beiden Gehäuseteile fluchtend zueinander ausgerichtet sind, auf einfache Weise zentriert von dem vorderen Gehäuseteil zu dem hinteren Gehäuseteil hin und umgekehrt problemlos verschoben werden kann, bis der hintere Kontaktträgerabschnitt des Kontaktträgers das hintere Gehäuseteil und der vordere Kontaktträgerabschnitt das vordere Gehäuseteil untergreift.

Bevorzugt wird weiterhin eine Ausführungsform der Erfindung, bei der der Kontaktträger durch radiales Verrasten in axialer Richtung in dem Steckverbindergehäuse lösbar gegenüber den Gehäuseteilen festlegbar ist. Dies geschieht vorzugsweise durch komplementär zueinander ausgebildete Rastmittel an dem Kontaktträger und mindestens einem der Gehäuseteile. Die Verrastung des Kontaktträgers mit dem Steckverbindergehäuse erfolgt zweckmäßigerweise zwangsläufig, wenn die korrespondierenden Rastmittel zur Deckung gebracht werden. Das Lösen der Verrastung erfolgt wenn erforderlich von Hand, wozu die Rastmittel von der Vorderseite des Kontaktträgers aus einfach mittels einem Werkzeug außer Eingriff gebracht werden können, wenn das Steckverbindergehäuse geöffnet werden soll. Prinzipiell kann die Verrastung des Kontaktträgers mit dem vorderen Gehäuseteil, dem hinteren Gehäuseteil oder mit den beiden Gehäuseteilen des Steckverbindergehäuses vorgesehen sein. Insbesondere die Rastung im hinteren Gehäuseteil gibt eine zusätzliche Stabilität gegen ein Abknicken des vorderen Gehäuseteils.

In einer Ausführungsform des elektrischen Steckverbinders weist das Steckverbindergehäuse einem vom Anschlussraum abgetrennten abgeschlossenen Kodierraum auf, in der eine Brückkonfiguration der elektrischen Kontakte des Steckverbinders erfolgen kann. Dies ist insbesondere dann von Vorteil, wenn mit dem elektrischen Steckverbinder die Verbindung zu einem Drehstrommotor hergestellt werden soll. Durch die Brückenkonfiguration ist die Betriebsart des Motors in Dreiecks- oder Sternschaltung einfach festlegbar, ohne die Reihenfolge der Anschlussleitungen bezüglich der elektrischen Kontakte im Anschlussraum zu verändern. Dies hat außerdem den Vorteil, dass an dem Motor selbst keinerlei Maßnahmen mehr erforderlich sind, um die Betriebsart und die Drehrichtung des Mehrphasenmotors festzulegen.

In einer vorteilhaften Variante ist die Brückenkonfiguration als interne Steckverbindung ausgebildet, die in dem Kodierraum vorzugsweise mit einem Kodierstecker hergestellt wird. Die Überbrückung von bestimmten elektrischen Kontakten erfolgt dabei vorzugsweise mittels Stanz- oder Drahtbiege- und/oder Stanzbiegeteilen als elektrische Brücken, die in einem entsprechenden Rastermaß vorgefertigt dem Anschlussstecker beigefügt sind. Damit kann in einfacher Weise die elektrische Verbindung zwischen Kontakten schnell und kontaktsicher hergestellt werden. Auch eine Änderung der Betriebsart ist damit schnell und problemlos möglich. Die jeweiligen Brücken sind dabei vorzugsweise in einen Kunststoffträger eingebettet, der auch eine falsche Polung bezüglich der elektrischen Kontakte verhindert.

Bei einer weiteren Variante des erfindungsgemäßen Anschlusssteckers weisen die elektrischen Kontakte jeweils eine Federschenkelklemme als Anschlussmittel zum Befestigen der elektrischen Anschlussleitungen auf. Die Federschenkelklemmen werden dabei über Klemmstößel betätigt, die über die Rückseite des Kontaktträgers vorstehen, so dass die Anschlussleitungen besonders einfach mit den elektrischen Kontakten verbindbar bzw. von diesen lösbar sind.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein.

Es zeigen:
- Figur 1: einen Drehstrommotor mit Anschlussstecker, auf den ein als Kupplung ausgeführter erfindungsgemäßer Steckverbinder aufgesteckt ist, in perspektivischer Ansicht;
- Figur 2: den Steckverbinder aus Figur 1 mit geschlossenem Steckverbindergehäuse in perspektivischer Ansicht;
- Figur 3: den Steckverbinder aus Figur 2 mit geöffnetem Steckverbindergehäuse in perspektivischen Ansicht;
- Figur 4: den Steckverbinder aus Figur 1 im verriegelten Zustand (Figur 4a), um unverriegelten Zustand (Figur 4b) und im geöffneten Zustand (Figur 4c) in einer Längsschnittdarstellung; und
- Figur 5: den Kontaktträger des Steckverbinders aus Figur 1 mit darin einliegenden elektrischen Kontakten, aufgenommen in dem Steckverbindergehäuse im verriegelten Zustand (Figur 5a) und im unverriegelten Zustand (Figur 5b) in einer Achsschnittdarstellung.

Das dargestellte Ausführungsbeispiel beschreibt einen erfindungsgemäßen elektrischen Steckverbinder, in dem der Kontaktträger in dem vorderen Gehäuseteil axial verschiebbar geführt und mit diesen zur Festlegung in der Wirkposition verriegelbar, insbesondere verrastbar ist.

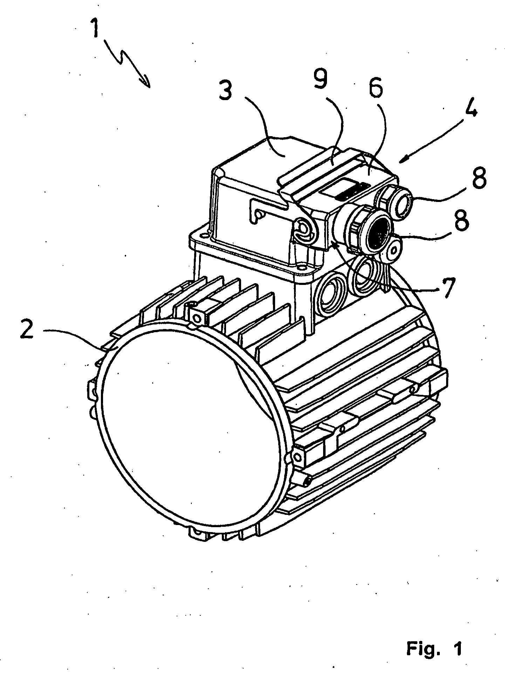

Figur 1 zeigt einen Mehrphasenmotor 1 mit einem Motorgehäuse 2, an dem außen ein Anschlussstecker 3 angebracht ist. In der Figur nicht sichtbare Steckkontakte des Anschlusssteckers 3 sind mit den Wicklungsleitern des Motors 1 elektrisch leitend verbunden. Die Spannungsversorgung des Mehrphasenmotors 1 erfolgt über einen erfindungsgemäßen als Kupplung ausgebildeten elektrischen Steckverbinder 4, der mit den Anschlussstecker 3 zusammengesteckt ist. Der Steckverbinder 4 ist mit in der Zeichnung nicht dargestellten elektrischen Anschlussleitungen mit einem Drehstromnetz verbunden. Zum Einführen der Anschlussleitungen in das Steckverbindergehäuse 6 weist der Steckverbinder 4 an einem hinteren Ende 7 zwei Kabeldurchführungen 8 auf. Der Steckverbinder 4 ist mit einer Sicherungsklammer 9, die federnd ausgebildet und schwenkbar an dem Steckverbindergehäuse 6 befestigt ist, mit dem Anschlussstecker 3 verriegelt.

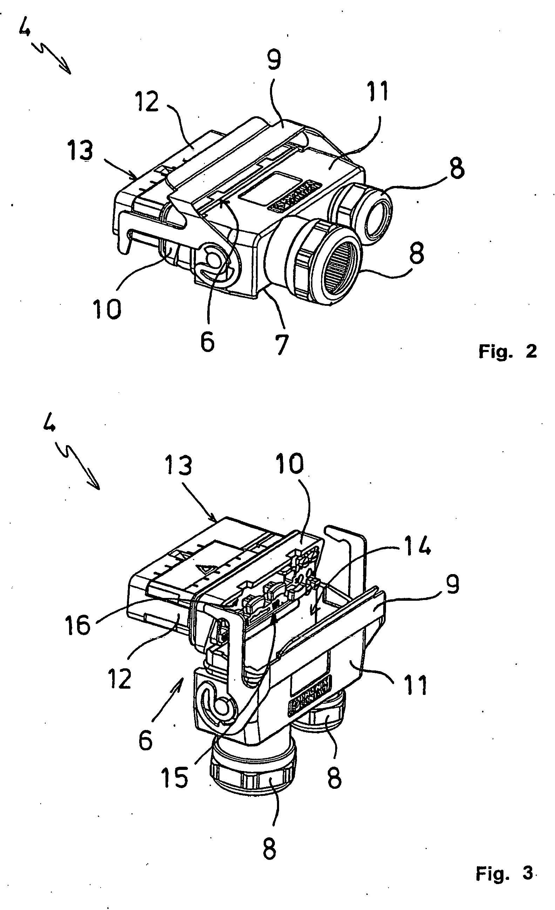

Figur 2 zeigt den erfindungsgemäßen Steckverbinder aus Figur 1 abgenommen vom Drehstrommotor 1 vergrößert, mit Blick von oben auf das hintere Ende 7. Das Steckverbindergehäuse 6 weist ein vorderes Gehäuseteil 10 und ein hinteres Gehäuseteil 11 auf, die wie aus Figur 3 ersichtlich, zueinander schwenkbar ausgeführt sind. In dem Steckverbindergehäuse 6 ist ein Kontaktträger 12 mit einliegenden, in der Zeichnung nicht sichtbaren elektrischen Kontakten angeordnet, der über das vordere Gehäuseteil 10 vorsteht. Die Vorderseite 13 des Kontaktträgers 12 ist dabei komplementär zu der Einsteckseite des Anschlusssteckers 3 ausgebildet.

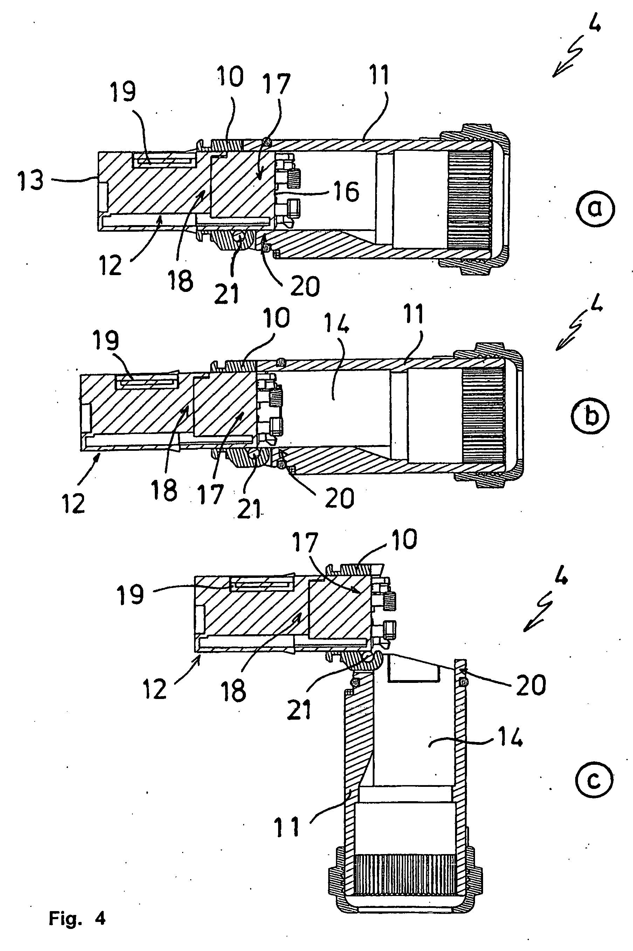

Figur 3 zeigt das in der Figur 2 dargestellte Steckverbindergehäuse 6 geöffnet. Die beiden Gehäuseteile 10, 11 des Steckverbindergehäuse 6 sind schwenkbeweglich miteinander verbunden. Das hintere Gehäuseteil 11 ist über eine orthogonal zur Steckrichtung angeordnete Schwenkachse 21, die nur in den Figuren 4a - 4c dargestellt ist, um zirka 90 Grad gegenüber dem vorderen Gehäuseteil 10 geschwenkt, so dass ein Anschlussraum 14 des Steckverbinders 4 sowie die Anschlussmittel 15 der nicht sichtbaren elektrischen Kontakte auf der Rückseite 16 des Kontaktträgers 12 zugänglich sind. Der Kontaktträger 12 überragt bei geöffnetem Steckverbindergehäuse 6 das vordere Gehäuseteil 10 weiter als bei geschlossenem Steckverbindergehäuse 6.

Der Kontaktträger 12, der in dem vorderen Gehäuseteil 10 in und entgegen der Steckrichtung axial verschiebbar geführt befestigt ist, wirkt wie ein Riegel, wenn er in das hintere Gehäuseteil 11 ein Stück weit eingeführt ist, und verriegelt die beiden Gehäuseteil 10, 11 in dem in der Figur 2 gezeigten gestreckten Zustand des Steckverbinders 4 sicher. Dadurch dass das vordere Gehäuseteil 10 im entriegelten Zustand, Wie aus den Figuren 4b, 4c ersichtlich, lediglich noch einen hinteren Kontaktträgerabschnitt 17 übergreift, ist der in einem mittleren Kontaktträgerabschnitt 18 angeordnete abgeschlossene Kodierraum 19 für eine Brückenkonfiguration zugänglich. In dem in der Figur 4a dargestellten verriegelnden Zustand der beiden Gehäuseteile 10, 11 des Steckverbindergehäuses 6 verhindert das vordere Gehäuseteil 10 den Zugang zu dem Kodierraum 19, indem es den abgeschlossenen Kodierraum 19 zumindest teilweise übergreift.

In den Figuren4a - 4c ist das Öffnen des Steckverbindergehäuses 6 schrittweise in Längsschnittdarstellungen abgebildet. Das Schließen des Steckverbindergehäuses 6 erfolgt in umgekehrter Reihenfolge.

Figur 4a zeigt das vordere 10 und das hintere 11 Gehäuseteil des Steckverbindergehäuse 6 im gestreckten Zustand miteinander verriegelt. Der Kontaktträger 12 greift mit seinem hinteren Kontaktträgerabschnitt 17 in einen vorderen Gehäuseteilabschnitt 20 des hinteren Gehäuseteils 11 ein. Das hintere Gehäuseteil 11 übergreift dabei mit seinem vorderen Gehäuseteilabschnitt 20 den Kontaktträger 12 zumindest bereichsweise formschlüssig. Ebenso übergreift das vordere Gehäuseteil 10 den mittleren Kontaktträgerabschnitt 18 zumindest abschnittsweise formschlüssig, so dass der Zugang zu dem Kodierraum 19 im mittleren Kontaktträgerabschnitt 17 gesichert ist.

Die Figur 4b zeigt den Steckverbinder 4 aus Figur 4a im unverriegelten Zustand ansonsten unverändert. Der Kontaktträger 12 ist in Einsteckrichtung des Steckverbinders 4 aus dem vorderen Gehäuseteilabschnitt 20 des hinteren Gehäuseteils 11 soweit herausgezogen, dass der hintere Kontaktträgerabschnitt 17 nur noch von dem vorderen Gehäuseteil 10 übergriffen wird. Die beiden Gehäuseteile 10, 11 sind damit nicht mehr miteinander verriegelt. Außerdem ist der Zugang zu dem Kodierraum 9 jetzt nicht mehr durch das vordere Gehäuseteil 10 gesichert. Das vordere Gehäuseteil 10 ist nunmehr gegenüber dem hinteren Gehäuseteil 11 bis zu 90 Grad oder mehr verschwenkbar. Dazu sind die beiden Gehäuseteile 10, 11 mittels einer orthogonal zur Steckrichtung angeordneten Schwenkachse 21 beweglich miteinander verbunden.

In der Figur 4c ist der erfindungsgemäße Steckverbinder 4 aufgeklappt abgebildet. Das vordere Gehäuseteil 10 erstreckt sich im Wesentlichen senkrecht zu dem hinteren Gehäuseteil 11. Der Anschlussraum 14, der bei miteinander fluchtend angeordneten Gehäuseteilen 10, 11 verschlossen ist, ist jetzt zugänglich. Ebenso sind in dieser Stellung die Anschlussmittel 15 an der Rückseite 16 des Kontaktträgers 17 erreichbar.

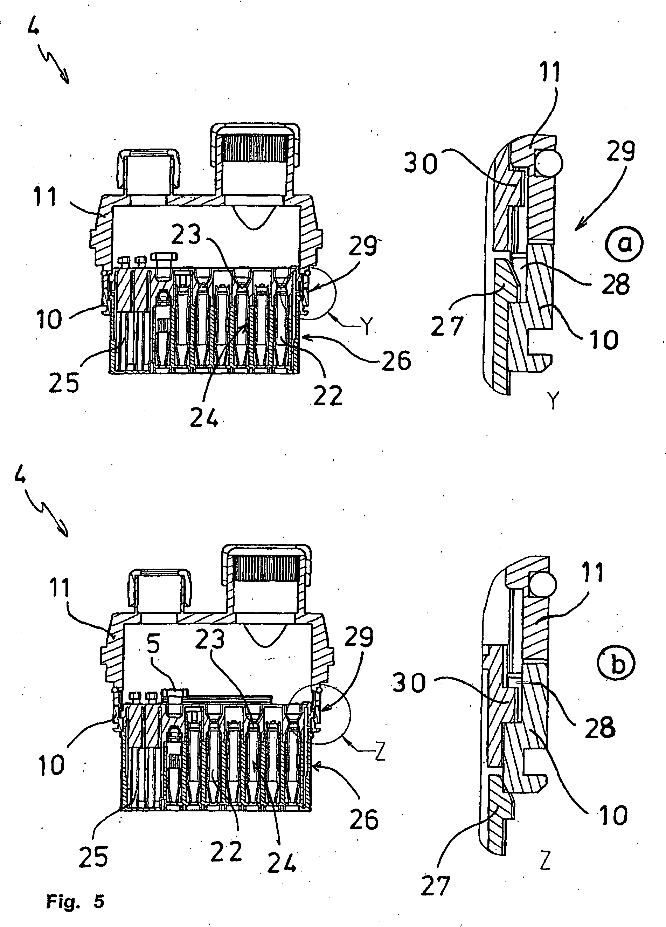

Die Figur 5 zeigt den Steckverbinder 4 entsprechend den Figuren 4a und 4b, jedoch mit Blickrichtung von oben auf den Kodierraum 19 in Schnittdarstellungen. In den Figuren 5a, 5b sind eine Anzahl von elektrischen Kontakten 22 nebeneinander in dem Kontaktträger 12 angeordnet sichtbar dargestellt. Sie erstrecken sich von der Rückseite 16 bis zu der Vorderseite 13 des Kontaktträgers 12 parallel zueinander. Der Kontaktträger 12 ist in das Steckverbindergehäuse 6 eingeführt, das aus dem vorderen 10 und dem hinteren 11 Gehäuseteil zusammengesetzt ist, die zueinander gestreckt angeordnet sind. In dem hinteren Gehäuseteil 11 ist der Anschlussraum 14 ausgebildet, dem in der Zeichnung nicht dargestellte elektrische Anschlussleitungen über die Kabeldurchführungen 8 zuführt sind.

Die elektrischen Kontakte 22 weisen auf der Rückseite 16 des Kontaktträgers 12 Federschenkelklemmen 23 zum Verbinden mit den elektrischen Anschlussleitungen und in dem mittleren Kontaktträgerabschnitt 18 Kontaktbuchsen 24 zur Brückenkonfiguration in dem Kodierraum 19 auf. Außerdem sind noch Durchgangselemente 25 für Steuerleitungen neben den elektrischen Kontakten 22 angeordnet. Die Durchgangselemente 25 weisen wie die Kontakte 22 Federschenkelklemmen 25 zum Anschluss der Steuerleitungen auf, wobei die Federschenkelklemmen 25 mit Klemmstößeln 25 betätigbar sind.

An gegenüberliegenden Seitenflächen 26 des Kontaktträgers 12 sind Rasthaken 27 angeformt, die zur Verriegelung der Gehäuseteile 10, 11 mit Rastausnehmungen 28 im vorderen Gehäuseteil 10 zusammenwirken. Im verriegelnden Zustand, der in der Figur 5a gezeigt ist, greifen die Rasthaken 27 in die Rastausnehmungen 28 ein. Die Rasthaken 27 und die Rastausnehmungen 28 werden zusammen als Rastmittel 29 bezeichnet. Die Rastmittel 29 sind in der Ausschnittsvergrößerung Y der Figur 5a vergrößert dargestellt, so dass die Ausbildung der Rastmittel 29 und deren Eingriff deutlich sichtbar sind. Dabei übergreift das vordere Gehäuseteil 10 den mittleren Kontaktträgerabschnitt 18 und das hintere Gehäuseteil 11 den hinteren Kontaktträgerabschnitt 17 am Umfang formschlüssig. Damit sind die beiden Gehäuseteile 10, 11 miteinander lagestabil verriegelt und die Verriegelung mittels der Rastmittels 19 lösbar gesichert.

Die Figur 5b zeigt den Steckverbinder 1 im entriegelten gestreckten Zustand. Die Rastmittel 29 sind, wie die Ausschnittsvergrößerung Z der Figur 5b entnehmbar ist, außer Eingriff. Des weiteren ist der Kontaktträger 12 gegenüber der Darstellung in der Figur 5a in Einsteckrichtung des Steckverbinders 1 gegenüber dem Steckverbindergehäuse 6 versetzt. Der hintere Kontaktträgerabschnitt 17 greift jetzt nicht mehr in das hintere Gehäuseteil 11 ein. Er ist von dem vorderen Gehäuseteil 10 vollständig aufgenommen. Damit ist die Verriegelung der beiden Gehäuseteile 10, 11 des Steckverbindergehäuses 6 aufgehoben, so dass das vordere Gehäuseteil 10 gegenüber dem hinteren Gehäuseteil 11, oder umgekehrt, zum Öffnen des Steckverbindergehäuses 6 schwenkbar ist. Am hinteren Kontaktträgerabschnitt 17 ist ein Haltebund 30 in Einsteckrichtung des Steckverbinders 4 hinter dem Rasthaken 27 angeformt, der den Kontaktträger 12 im entriegelten Zustand an dem vorderen Gehäuseteil 10 hält.

## Patentansprüche

1. Elektrischer Steckverbinder (1), mit einem isolierenden Kontaktträger (12), der eine Anzahl von parallel zueinander angeordnete elektrische Kontakte (22) in Form von Kontaktstiften oder Kontaktbuchsen enthält und der in ein Steckverbindergehäuse (6) axial einführbar ist, wobei die Kontakte (22) von einer Vorderseite (13) des Kontaktträgers (12) her zugänglich sind und auf einer Rückseite (16) des Kontaktträgers (12) Anschlußmittel (15, 23) zum Verbinden mit elektrischen Anschlussleitungen aufweisen, **dadurch gekennzeichnet, dass** das Steckverbindergehäuse (6) in Steckrichtung ein vorderes (10) und ein hinteres (11) Gehäuseteil aufweist, die mittels einer orthogonal zur Steckrichtung angeordneten Schwenkachse (21) gelenkig miteinander verbunden sind und von einer abgewinkelten Montagestellung in eine gestreckte Gebrauchsstellung des Steckverbindergehäuses (6) und umgekehrt schwenkbar sind, wobei der Kontaktträger (12) in der Gebrauchsstellung des Steckverbindergehäuses (6) derart in den Gehäuseteilen (10, 11) positionierbar ist, dass er in einer Wirkposition mindestens teilweise in das vordere Gehäuseteil (10) und das hintere Gehäuseteil (11) eingreift und an den Gehäuseteilen (10, 11) innen zumindest abschnittsweise seitlich in Anlage ist und damit ein Schwenken der Gehäuseteile (10, 11) verhindert.

2. Elektrischer Steckverbinder nach Anspruch 1, **dadurch gekennzeichnet, dass** der Kontaktträger (12) in dem vorderen Gehäuseteil (10) und/oder dem hinteren Gehäuseteil (11) axial verschiebbar geführt befestigt ist.

3. Elektrischer Steckverbinder nach Anspruch 1 oder 2, **dadurch gekennzeichnet, dass** die beiden Gehäuseteile (10, 11) im gestreckten Zustand durch den Kontaktträger (12) miteinander verriegelbar sind.

4. Elektrischer Steckverbinder nach Anspruch 3, **dadurch gekennzeichnet, dass** der Kontaktträger (12) zu dem vorderen Gehäuseteil (10) und/oder dem hinteren Gehäuseteil (11) komplementär ausgebildete Rastmittel (27, 28, 29) aufweist.

5. Elektrischer Steckverbinder nach einem der vorangegangenen Ansprüche, **dadurch gekennzeichnet, dass** der Kontaktträger (12) einen abgeschlossenen Kodierraum (19) aufweiset, in dem eine Brückenkonfiguration der Kontakte (22) festlegbar ist.

6. Elektrischer Steckverbinder nach Anspruch 5, **dadurch gekennzeichnet, dass** die Brückenkonfiguration als interne Steckverbindung ausgebildet ist und vorzugsweise mit einem Kodierstecker konfigurierbar ist.

7. Elektrischer Steckverbinder nach einem der vorangegangenen Ansprüche, **dadurch gekennzeichnet, dass** das vordere (10) und das hintere (11) Gehäuseteil derart miteinander schwenkbar verbunden sind, dass das hintere (11) gegenüber dem vorderen (10) Gehäuseteil um etwa 90 Grad oder mehr schwenkbar ist.

## Claims

1. Electrical plug connector (1) with an insulating contact carrier (12) that contains a number of electrical contacts (22) in the form of contact pins or contact sockets that are arranged parallel to each other, and which can be inserted axially into a plug connector housing (6), with the contacts (22) being accessible from the front side (13) of the contact carrier (12), and with the contacts having connecting elements (15, 23) on a rear side (16) of the contact carrier (12) for connecting with electrical power supply lines, **characterized in that**, in the insertion direction, the plug connector housing (6) has a front (10) and a rear (11) housing section that are connected to each other by means of a hinge joint with a swivel axle (21) that is oriented orthogonally to the insertion direction, and can be swiveled from an angled assembly position to a straightened operating position of the plug connector housing (6), and vice versa, with the contact carrier (12), the plug connector housing (6) being in operating position, being positionable in the housing sections (10, 11) in such a way that, when in effective position, it engages the front housing section (10) and the rear housing section (11) at least partially and makes contact laterally, at least in sections, with the inside surfaces of the housing sections (10, 11), thereby reliably preventing the swiveling of the housing parts (10, 11).

2. Electrical plug connector as claimed in Claim 1, **characterized in that** the contact carrier (12) is guided in an axially shiftable way in the front housing section (10) and/or the rear housing section (11).

3. Electrical plug connector as claimed in Claims 1 or 2, **characterized in that** in the straightened condition, the two housing sections (10, 11) can be locked together by the contact carrier (12).

4. Electrical plug connector as claimed in Claim 3, **characterized in that** the contact carrier (12) has latching elements (27, 28, 29) whose form is complementary to the front housing section (10) and/or the rear housing section (11).

5. Electrical plug connector as claimed in any one of the preceding Claims, **characterized in that** the contact carrier (12) has an enclosed coding chamber (19) in which a bridge configuration of the contacts (22) can be selected.

6. Electrical plug connector as claimed in Claim 5, **characterized in that** the bridge configuration has the form of an internal plug connection and can be configured preferably with a coding plug.

7. Electrical plug connector as claimed in any one of the preceding Claims, **characterized in that** the front (10) and the rear (11) housing section are swivelably joined in such a way that the rear (11) housing section can be swiveled by approximately 90 degrees or more relative to the front (10) housing section.

## Revendications

1. Connecteur électrique enfichable (1) muni d'un porte-contacts isolant (12) qui renferme un certain nombre de contacts électriques (22) disposés parallèlement les uns aux autres et revêtant la forme de broches de contact ou de douilles de contact, et peut être inséré axialement dans un boîtier (6) dudit connecteur enfichable, lesdits contacts (22) étant accessibles à partir d'une face antérieure (13) du porte-contacts (12) et présentant, sur une face postérieure (16) dudit porte-contacts (12), des moyens de raccordement (15, 23) dévolus à la liaison avec des conducteurs électriques de raccordement, **caractérisé par le fait que** le boîtier (6) du connecteur enfichable comprend, dans la direction d'enfichage, des parties antérieure (10) et postérieure (11) qui sont reliées l'une à l'autre de manière articulée au moyen d'un axe de pivotement (21) agencé orthogonalement vis-à-vis de ladite direction d'enfichage, et peuvent pivoter depuis une position coudée de montage jusqu'à une position déployée d'utilisation dudit boîtier (6) du connecteur enfichable, et inversement, le porte-contacts (12) pouvant être positionné dans les parties (10, 11) du boîtier (6) du connecteur enfichable, dans la position d'utilisation de ce dernier, de façon telle qu'il pénètre au moins partiellement dans la partie antérieure (10) et dans la partie postérieure (11) dudit boîtier, dans une position opérante, et soit intérieurement en applique contre lesdites parties (10, 11) du boîtier dans le sens latéral, au moins par zones, en interdisant ainsi un pivotement desdites parties (10, 11) dudit boîtier.

2. Connecteur électrique enfichable selon la revendication 1, **caractérisé par le fait que** le porte-contacts (12) est fixé dans la partie antérieure (10) du boîtier et/ou dans la partie postérieure (11) dudit boîtier, en étant guidé à coulissement axial.

3. Connecteur électrique enfichable selon la revendication 1 ou 2, **caractérisé par le fait que** les deux parties (10, 11) du boîtier peuvent être verrouillées mutuellement à l'état déployé, par l'intermédiaire du porte-contacts (12).

4. Connecteur électrique enfichable selon la revendication 3, **caractérisé par le fait que** le porte-contacts (12) est doté de moyens d'encliquetage (27, 28, 29) à profils complémentaires de ceux de la partie antérieure (10) du boîtier et/ou de la partie postérieure (11) dudit boîtier.

5. Connecteur électrique enfichable selon l'une des revendications précédentes, **caractérisé par le fait que** le porte-contacts (12) présente un compartiment confiné (19) à codage, dans lequel une configuration en pont des contacts (22) peut être fermement établie.

6. Connecteur électrique enfichable selon la revendication 5, **caractérisé par le fait que** la configuration en pont est conçue sous la forme d'une connexion intérieure par enfichage et peut, de préférence, être instaurée à l'aide d'un connecteur à codage.

7. Connecteur électrique enfichable selon l'une des revendications précédentes, **caractérisé par le fait que** les parties antérieure (10) et postérieure (11) du boîtier sont reliées l'une à l'autre avec une faculté de pivotement telle que la partie postérieure (11) puisse pivoter d'environ 90 degrés, ou plus, par rapport à la partie antérieure (10) dudit boîtier.
